# EUROPEAN PATENT SPECIFICATION

(11) **EP 2 242 943 B1**
(45) Date of publication and mention of the grant of the patent: **18.01.2012**
(21) Application number: 09711140.5
(22) Date of filing: 06.02.2009
(51) Int. Cl.: F16K 11/20, F16K 11/22, F16K 27/02

(54) **AN ISOLATION VALVE MANIFOLD**
ISOLATIONSVENTILVERTEILER
COLLECTEUR DE VANNE D ISOLEMENT

(30) Priority: 14.02.2008 GB 0802705
(43) Date of publication of application: 27.10.2010
(73) Proprietor: Bifold Fluidpower Limited, Manchester M24 1SW (GB)
(72) Inventor: BALMFORTH, Jonathan, Edward, Huddersfield HD2 1PS (GB)
(74) Representative: Every, David Aidan
(86) International application number: PCT/GB2009/000335
(87) International publication number: WO 2009/101388

(56) References cited:
- US-A- 5 709 247
- US-A- 5 725 024
- US-A- 5 832 956

## Description

The present invention relates to an isolation valve manifold for connection between a main process flow conduit and at least one fluid sensor, gauge or the like. It also relates to an isolation valve assembly incorporating such a manifold.

Isolation valve manifolds have been disclosed for example in documents US 5832956, US 5725024 or US 5709247.

If is often necessary to determine characteristics of fluid flow in a main process flow pipeline, such as, for example fluid pressure or temperature. The traditional approach to sensing such parameters is to introduce a reducer into the main flow pipeline and to connect a sensor or gauge to the conduit at a position adjacent to the reducer. A valve manifold is disposed between the sensor or gauge and the main process flow pipeline and connected to the latter by a branch pipe. In normal use the sensor allows for the pressure or other characteristic of the fluid flow to be determined without significant flow of fluid through the manifold as well as permitting venting as required. Generally the manifolds are configured to receive valves in a block and bleed arrangement whereby at least one isolation valve (the "block" valve) that is manually operable to allow isolation of the sensor from the main flow and at least one venting valve (the "bleed" valve) that allows the remaining fluid on the downstream side of the manifold to lie bled off. The valve manifold is used to isolate the sensor temporarily from the main flow in the event that the sensor needs servicing or replacing. In some applications it may be necessary to have multiple branch pipes (including, for example, T-pieces and/or elbow connectors) and reducers disposed along the length of the main flow conduit.

Conventional manifolds of the kind described above can be bulky and difficult to install, particularly as they are often employed in confined spaces. They are generally machined from a parallelepiped body and it is often difficult to configure the valve manifold arrangement in a compact form whilst ensuring that manual operation of the valves can be effected without difficulty. The valves (typically needle valves) are generally operated by manually rotating an actuating stem with a transverse handle and therefore sufficient clearance around each handle is required to allow for manual operation without being impeded by the neighbouring valve handles. In many applications the manifold and gauge are relatively heavy such that they impart a significant load on the connection between the branch pipes and main conduit.

It is an object of the present invention, amongst others, to obviate or mitigate the aforesaid disadvantages and/or to provide for an alternative or improved isolation valve manifold or isolation valve manifold assembly.

According to the present invention there is provided an isolation valve manifold for interconnecting a fluid flow conduit and a sensor for sensing a fluid flow characteristic, the manifold comprising at least one body having an inlet for fluid communication with the fluid flow conduit, an outlet for fluid communication with the sensor and a fluid path between the inlet and outlet, an outlet bleed port in selective fluid communication with the fluid path for bleed fluid from the fluid path, the body having an outer surface, first and second valve cavities that extend into the body from the outer surface, the first valve cavity for receipt of a first isolation valve for blocking the fluid path and defining an isolation valve chamber that forms part of the fluid path, the second valve cavity for receipt of a bleed valve and defining a bleed valve chamber that forms part of the fluid path, the first and second valve cavities being angularly offset and arranged such that the bleed valve and isolation valve chambers intersect one another so as to define an interconnecting opening that provides fluid communication between the bleed valve chamber and the isolation valve chamber.

The intersection of the chambers allows a compact arrangement and eliminates the need for cross-drilled passages between the chambers.

As is implied by the terms "first" isolation valve cavity or chamber, the manifold may, in some embodiments, have more than one isolation valve cavity and chamber, but not necessarily.

The first and second valve cavities are preferably also laterally offset in the direction along the fluid path.

The first and second valve cavities may be in the form of substantially cylindrical bores each being defined by a base wall and a side wall, the interconnecting opening being defined in the side walls adjacent to the base walls.

The first valve cavity may have a first portion that extends from the outer surface of the body and which is internally configured for engagement with part of the isolation valve and a second portion that defines the isolation valve chamber. The second portion may have a larger diameter than that of the first portion. The first portion may have an internal thread for engagement with a corresponding thread on the isolation valve.

The second valve cavity may have a first portion that extends from the outer surface of the body and which is internally configured for engagement with part of the bleed valve and a second portion that defines the bleed valve chamber. The second portion may have a larger diameter than that of the first portion. The first portion may have internal thread for engagement with a corresponding thread on the bleed valve.

The base wall of the isolation valve cavity may be penetrated by a first connecting passage and may define an isolation valve seat around an end of the first connecting passage. The first connecting passage may form part of the fluid path and may be in fluid communication with the inlet. An inlet passage may interconnect the inlet and the first connecting passage. The inlet passage may extend in substantially the same direction as the inlet and the first connecting passage may extend in substantially the same direction as the isolation valve cavity. The first connecting passage and the inlet passage may extend at substantially right angles to one another.

The base wall of the bleed valve cavity may be penetrated by a second connecting passage and may define a bleed valve seat around an end of the second connecting passage. The second connecting passage may form part of the fluid path and may be in fluid communication with the bleed outlet. It may interconnect the bleed valve cavity and the bleed outlet. An outlet passage may interconnect the outlet and the bleed valve chamber. The outlet passage may extend in substantially the same direction as the outlet and the second connecting passage may extend in substantially the same direction as the bleed valve cavity and the bleed outlet.

The at least one body may have a first end in which inlet is defined and a second end in which the outlet is defined.

The outer surface of the body may be substantially cylindrical about an axis. The first and second valve cavities may be offset along that axis. The cylindrical outer surface may be truncated by a mounting wall with a substantially planar surface which may extend between the first and second ends. The first valve cavity may extend in a substantially radial direction with respect to the axis of the body as may the second valve cavity.

There may be a third valve cavity that extends into the body from the outer surface, for receipt of a second isolation valve and defining a second isolation valve chamber that forms part of the fluid path.

The third valve chamber may also intersect the bleed valve chamber so as to define a second opening that provides fluid communication between the bleed valve chamber and the second isolation valve chamber. Alternatively, the bleed valve and third valve chambers may be connected by a further connecting passage.

The third valve cavity is preferably angularly offset from the bleed valve cavity. It is also preferably laterally offset. The third valve cavity may also be angularly and/or laterally offset from the first valve cavity

In accordance with a second aspect of the present invention there is provided a valve manifold assembly comprising valve manifold as defined above with valves fitted in the respective valve cavities, the valves being actuable between open and closed positions. The valves may comprise a rotary valve stem connected to a valve bonnet which is received in the respective valve cavity. Rotation of the valve stem is converted into translation by virtue of the engagement with the valve bonnet. In the closed position an end of the valve stem is sealed against the valve seat. In the open position the end of the valve stem is lifted away from the valve seat.

The valve or valves may be fitted in the cavity with a threaded connection or otherwise.

Specific embodiments of the present invention will now be described, by way of example only, with reference to the accompanying drawings in which:
Figure 1 is a diagrammatic representation of a first embodiment of an isolation valve with bleed in accordance with the present invention;
Figure 2 is a perspective view of the first embodiment of a valve manifold corresponding to figure 1 but without valves present and in accordance with the present invention;
Figure 3 is a side view of the manifold of figure 2;
Figure 4 is a plan view of the manifold of figure 2;
Figure 5 is an end view of the manifold of figure 2;
Figure 6 is an opposite end view of the manifold of figure 2;
Figure 7 is a sectioned view along line A-A of figure 3;
Figure 8 is a sectioned view along line D-D of figure 3;
Figure 9 is a plan view of the manifold of figures 2 to 6 fitted with isolation and bleed valves;
Figure 10 is an end view of the manifold and valves of figure 9;
Figure 11 is a sectioned view of the isolation valve fitted in a respective valve chamber of the valve manifold of figures 2 to 8;
Figure 12 is a diagrammatic representation of a double block isolation valve with bleed in accordance with the present invention;
Figure 13 is a perspective view of the second embodiment of a valve manifold corresponding to figure 12 and in accordance with the present invention;
Figure 14 is a longitudinal sectioned view of the valve manifold of figure 13, about a plane that intersects the central longitudinal axis of the manifold body and that is perpendicular to wall 119;
Figure 15 is a plan view of the manifold of figure 13, the body being rotated 180° compared to figure 14;
Figure 16 is a sectioned view along line A-An of figure 15,
Figure 17 is a sectioned view along line B-B of figure 15;
Figure 18 is a sectioned view along line C-C of figure 15;
Figure 19 is a plan view of the manifold of figures 13 to 18 shown fitted with three valves;
Figure 20 is an end view of the manifold and valves of figure 19; and
Figure 21 is a longitudinal sectioned view of an alternative embodiment of a valve manifold in accordance with the present invention.

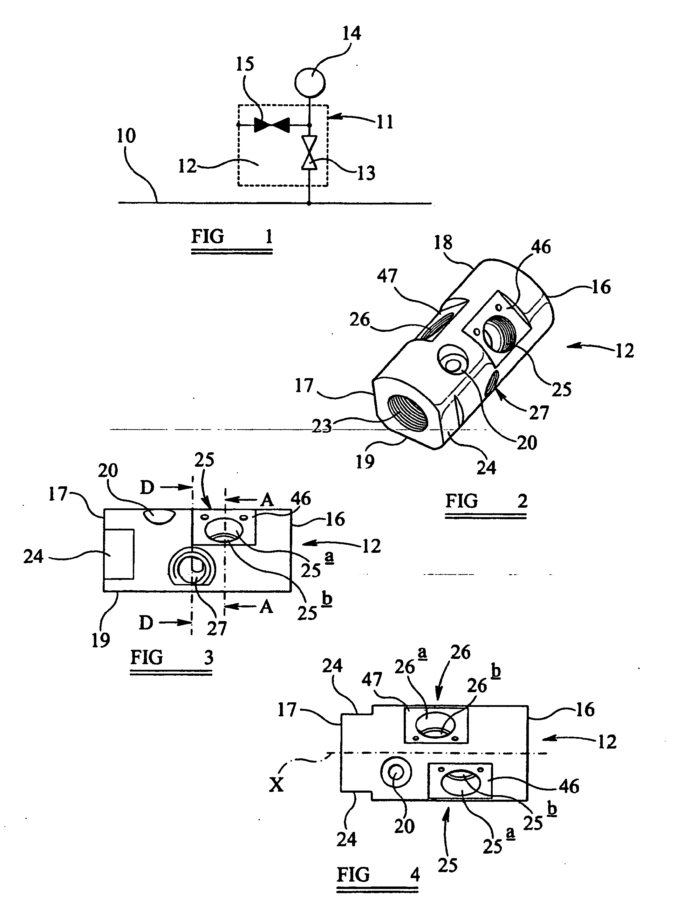

Referring first to figure 1, a principal fluid flow conduit in the form of a pipeline 10 is fitted with an isolation valve manifold assembly 11 comprising a manifold body 12 fitted with an isolation valve 13 for isolating a pressure gauge 14 from the pipeline 10 and a bleed valve 15 for bleeding remaining fluid between the isolation valve and the gauge 14.

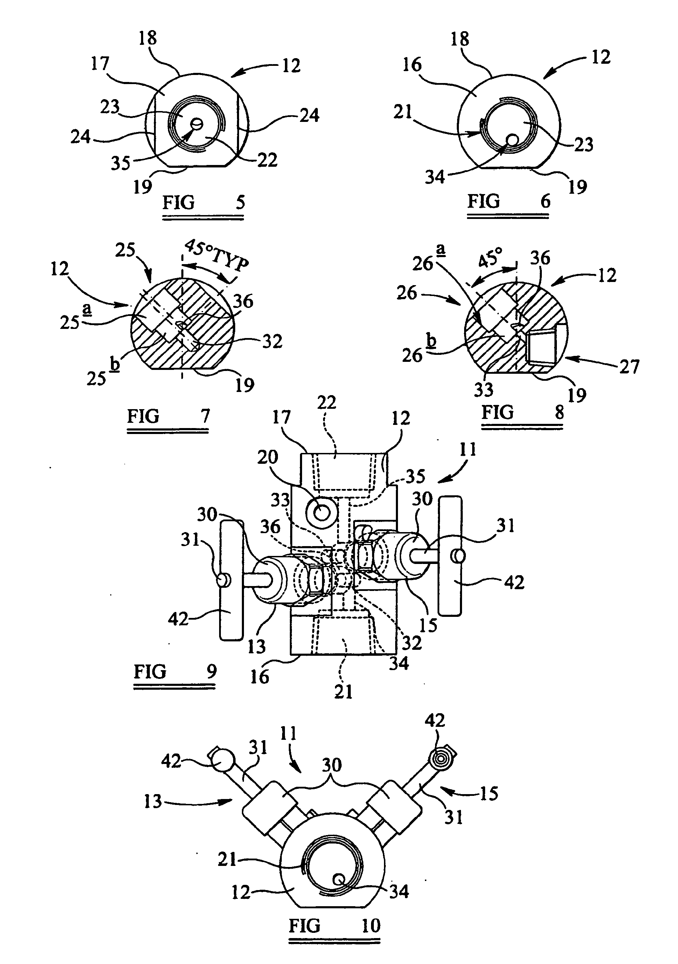

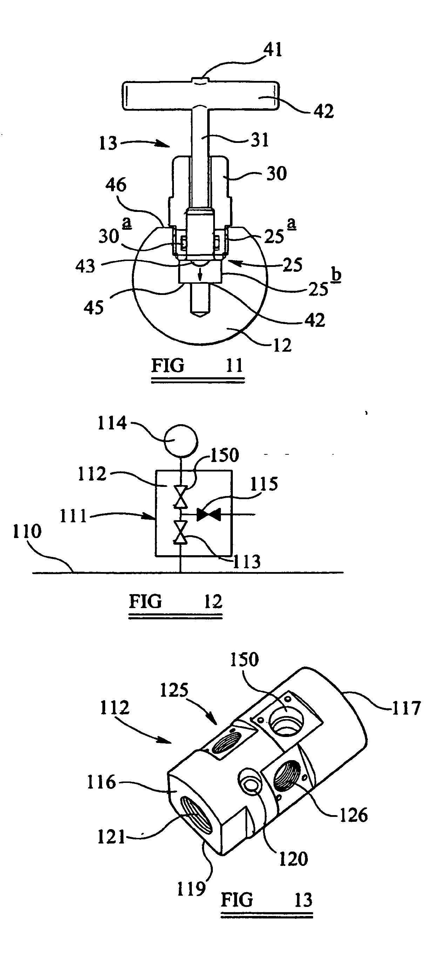

The valve manifold body 12 is shown in figures 2 to 8 without the valves 13, 15 present and in figures 9 and 10 with valves fitted. Figure 11 is a schematic representation illustrating operation of the isolation valve 13.

The manifold body 12 is of unitary construction with first and second ends 16, 17 and a generally cylindrical outer surface 18 that extends around a central longitudinal axis. The outer surface 18 is truncated by a single side wall 19 that extends along the length of the body between the first and second ends 16, 17. The side wall 19 is flat and affords the option of the manifold assembly 11 being mounted on a supporting plate, panel or other surface (not shown) by a suitable fixing. A through bore 20 (with counter bore) is provided for such a fixing screw or bolt.

The first end 16 of the manifold body 12 is penetrated by an inlet port 21 which is internally threaded for connection to the pipeline 10 (via, for example, a connecting branch conduit or a suitable connector) and, similarly, the second end 17 of the body 12 is penetrated by an outlet port 22 which is internally threaded for connection, directly or indirectly, to the pressure gauge 14. Each of the ports 21, 22 terminates in a base wall 23.

A pair of opposed short flat surfaces 24 defined on the outer surface 18 of the body 12 at the second end 17 extend at substantially 90° to the side wall 19 and allow the body to be engaged by a suitable tool when the body is fitted to or removed from the gauge or pipeline.

The manifold body 12 is also penetrated in a generally radial direction relative to the central axis by isolation and bleed valve "pockets" 25, 26 and an outlet bleed port 27 that are axially offset along the length of the body. Each valve pocket 25, 26 is designed to receive a respective needle valve 13, 15 (shown-onlyin figures 9 and 10) and is in the form of a cylindrical bore defined around a central bore axis, the wall of the bore being inwardly stepped part way along the axial length so as to define upper and lower portions 25a, 25b or 26a, 26b. The upper portion 25a, 26a has an internal surface that is threaded for engagement with a bonnet 30 of the respective needle valve 13, 15 whilst the lower portion 25b, 26b defines a valve chamber in which an end of a valve stem 31 is received.

The valve pockets 25, 26, as well as being axially spaced along the length of the manifold body 12, are also angularly spaced about the central axis (denoted X in figure 4) of the body 12 by, in this instance, around 90° (each being at 45° to a place which is orthogonal to the wall 19), although it will be appreciated that other angular spacings may be used.

The outlet bleed port 27 is also defined by a cylindrical bore which is internally threaded for connection to a suitable conduit for bleeding fluid to atmosphere.

At the bottom of each valve pocket 25, 26 there is a respective small bore connecting passage 32, 33 (see figures 7 to 9) that extends in a direction substantially the same as the direction in which the pocket 25, 26 extends into the body 12. A similar small bore inlet passage 34 (figures 5, 9 and 10) extends from the base wall 23 of the relatively large bore inlet port 21 in a direction parallel to the central axis of the body 12 and intersects with a first of the connecting passages 32. Similarly, a small bore outlet passage 35 extends between the valve chamber 26b of the bleed valve 15 and the relatively large bore outlet port 22.

A second of the small bore connecting passages 33 interconnects the bleed valve chamber 26b and the outlet bleed port 27 as is best seen in figure 8.

The isolation and bleed valve pockets 25, 26 are positioned axially such that whilst their central axes are offset in a direction along the axial length of the manifold body 12, the peripheries of the valve chambers 25b, 26b-intersect at their bottom ends so as to define an interconnecting opening 36 between the two. This can be seen in figure 9 at the intersection of dotted lines representing the valve pockets and in figures 7 and 8.

As mentioned previously, each valve pocket 25, 26 is designed to receive a respective needle valve 13, 1-5 as-shown in-figures 9,10 and 11. The valves 13, 15 are of conventional design and comprise a valve bonnet 30 having a cylindrical first end that is threaded for engagement in the upper portion 25a, 26a of the valve pocket 25, 26. Each bonnet 30 receives a respective rotary valve actuator comprising an elongate valve stem 31 that is threadedly engaged with an internal surface of the fixed bonnet 30 such that its rotation causes it to translate relative to the bonnet 30. The stem 31 has a first end 41 outside of the valve pocket 25, 26 and which is connected to a handle 42 in the form of a transverse bar. The opposite second end of the stem extends into bonnet 30 and terminates in the valve chamber 25b, 26b. The second end defines a part spherical sealing tip 43 designed to seat against a valve seat 44 defined on a base wall 45 of the pocket 25, 26 around an end of the respective connecting passage 32, 33. The bonnet 30 contains a non-adjustable seal 30a to prevent leakage of fluid between the valve stem and the bonnet 30.

The outer surface 18 of the manifold body 12 is machined to define a substantially flat surface 46, 47 around the two valve pockets 25, 26 so as to permit the valve bonnet 30 sit securely in the body 12.

Each of the ports 21, 22, 27 has a standard NPT threaded connection feature so as to permit connection to other conduits or components.

In order to open or close a valve 13, 15 the stem 31 is rotated about its longitudinal axis by the handle 42. Rotation in one direction causes the stem 31 to translate along its longitudinal axis relative to the bonnet 30 towards the valve chamber 25b, 26b (see arrow in Figure 11) until the tip 43 engages against the valve seat 44 in a sealing relationship so that the valve is closed. In this position fluid cannot pass between the valve chamber 25b, 26b and the respective connecting passage 32, 33 in either direction. Rotation in the other direction opens the valve by_{.} effecting translation of the stem 31 in the opposite direction such that the tip 43 lifts off -the- valve seat 44 to allow fluid flow bet ween the chamber 25b, 26b and the respective connecting passage 32, 33. In figure 11 the isolation valve is shown in the open condition and the translatory movement is indicated by the arrow.

In order to take readings from the pressure gauge 14 the isolation valve 13 is opened to the position shown in figure 11 so as to allow fluid to flow from the pipeline 10 into the valve manifold assembly 11. The fluid flows into the inlet port 21 to the inlet passage 34 and, since the tip 43 of needle valve stem 31 is raised off the valve seat 44 it flows into the isolation valve chamber 25b. From there the fluid egresses through opening 36 at the intersection of the valve pockets 25, 26 and into the bleed valve chamber 26b. The bleed valve 15 is in a normally closed position whereby the tip 43 of valve stem 31 is sealed against the valve seat 44 around an end of the second connecting passage 33 so that fluid is forced to egress through the outlet passage 35 to the outlet port 22 and on to the pressure gauge 14.

When the gauge is not in use, requires servicing, replacement or otherwise, the isolation valve 13 is closed by rotating the handle 42 until the valve stem tip 43 is sealed against the valve seat 44. The bleed valve 15 may then be opened to allow any pressurised fluid present in the valve chambers 25b, 26b to vent through the second connecting passage 33 and the bleed port 27 to atmosphere, or otherwise, and to check there is no leakage past the isolation valve. The gauge can then be removed, replaced or exchanged.

The flow of fluid through the bleed valve chamber 26b is in reverse to the conventional direction of fluid flow in a needle valve chamber of this kind. In conventional flow, fluid enters the valve chamber from the base wall 45 via the connecting passage 32 or 33 (when the valve is open) in the manner of the flow through the isolation valve chamber 25b as described above, whereas in view of the intersection of the valve pockets 25, 26 flow into the bleed valve chamber is via the opening 36 when the valve is closed and out through the second connecting passage 33 at the base wall 45 of the pocket 26 when the valve is open. In order to prevent the seal 30a in the bonnet 30 of the bleed needle valve 15 extruding between the stem and bonnet it is necessary to use a non-adjustable version (i.e. there is no provision for tightening a component of the bonnet down to adjust the seal).

The arrangement of the manifold assembly 11 and the needle valves 13, 15 as described above ensure there is sufficient clearance between the valve handles 42 to allow for them to be manipulated with ease whilst maintaining a compact configuration of the manifold assembly 11. The angular offset of the valve pockets 25, 26 allows the valves 13, 15 to extends in different directions such that there is no scope for interference between the two handles 42 when they are manually rotated. The generally cylindrical form of the manifold body 12 means that it can be manufactured from round bar using high speed automatic machining centres rendering the production operation (e.g. milling, turning and drilling) relatively simple and rapid. The compact disposition of the needle valves 13, 15 in the body 12 also allows less material to be used for the manifold body. For example, a generally cylindrical body uses around 30% less material than a corresponding parallelepiped manifold body. Moreover, the intersection of the valve pockets eliminates the need for a relative expensive and time-consuming cross-drilling step in the manufacturing process. The drilling of the inlet and outlet passages is relatively simple as they extend from the inlet and outlet ports and, similarly the drilling of the small bore connecting passages is relatively simple as they extend from the base wall of the valve pockets.

The lighter weight of the manifold body 12 ensures that it does not put undue load or strain on the connections to the main flow conduit 10, even if it is not supported on a panel or plate. However, the optional flat surface does allow the body 12 to be mounted on a supporting panel or backplate, if desired.

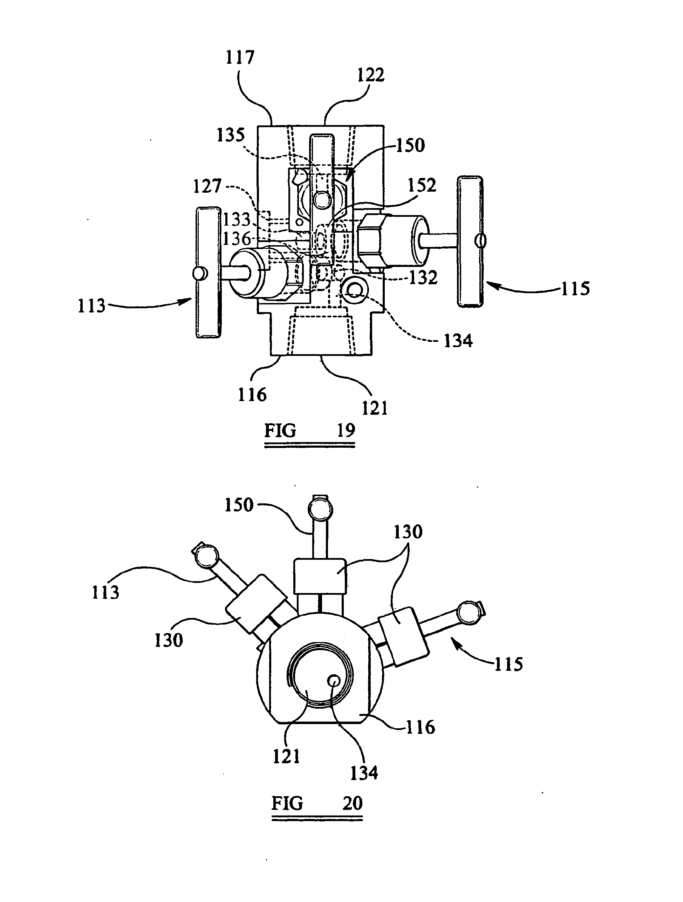

An alternative embodiment of the valve manifold having all the same advantages of the preceding embodiment is illustrated in figures 12 to 18 and in figures 19 and 20 where it is shown fitted with valves. Parts corresponding to those of the first embodiment are given the same reference numerals but increased by 100 and are not further described in any detail except in so far as they differ from their counterparts. This embodiment is a double block and bleed valve manifold assembly 111 for two isolation valves 113, 150 and an intermediate bleed valve 115. The arrangement is very similar to that of the preceding embodiment with the valves 113, 115 and pockets 125, 126 being identical in configuration. A second isolation valve pocket 151 and valve 150 is provided downstream of the bleed valve 115 and upstream of the gauge 114 (assuming fluid is moving in a direction from the pipeline 110 towards the gauge 114).

In practice, the manifold of this embodiment is bi-directional since there are two isolation valves 113, 150 and an intermediate bleed valve 115. The body can thus oriented such that either of the ports 121, 122 at each end 116, 117 is connected to the gauge 114. For the sake of convenience and ease of understanding, the following description refers to inlet and outlet ports but it should be borne in-mind that the body may be reversed such that the inlet port becomes the outlet port and vice versa.

The inlet port 121 is connected, as before, to the first isolation valve chamber 125b via a small bore inlet passage 134 and a first connecting passage 132. The valve chambers 125b, 126b of the first isolation valve pocket 125 and the bleed valve pocket 126 again intersect to define a first opening 136. The bleed valve chamber 126b and the second isolation valve chamber 151 b are, in contrast axially spaced such that they do not intersect but there is provided a small cross bore passage 152 that interconnecting the chambers 126b and 151b. The second isolation valve 150 has a third small bore connecting passage 153 extending from the base wall 145 of its valve pocket 151 in the same manner as the first and second connecting passages 132, 133 and an outlet passage 135 interconnects an outlet port 122 with the third connecting passage 153. The second interconnecting passage 133 which extends from the bleed valve chamber 126b is this time connected directly to the outlet bleed port 127.

In operation, for the gauge 114 to be operational the first and second isolation valves 113, 150 are open with the bleed valve closed 115. The fluid passes through the inlet port 121, the inlet passage 134 and the first connecting passage 132 to the first isolation valve chamber 125b from where it egresses into the bleed valve chamber 126b via the first opening 136. Since the bleed valve 115 is closed there is no access to the second connecting passage 133 and the bleed port 127 and so fluid passes through the passage 152 to the second isolation valve chamber 151b from where it flows out of the third connecting passage 153 and the outlet passage 135 to the outlet port 122 and gauge 114.

When the gauge 114 is not in use, requires servicing, replacement or otherwise, the isolation valves 113, 150 are both closed by rotating their respective handles 142 until the valve stem tips (not shown) are sealed against the respective valve seats 144. This prevents fluid from the pipeline 110 passing through the manifold body 112. The bleed valve 115 may then be-opened to allow any pressurised fluid present in the valve chambers 125b, 126b or 151b to vent through the second connecting passage 133 and the bleed port 127 to atmosphere, or otherwise. The presence of the second isolation valve 150 allows the user to ascertain whether there is leakage past the first isolation valve 113 without it passing to the pressure gauge 114.

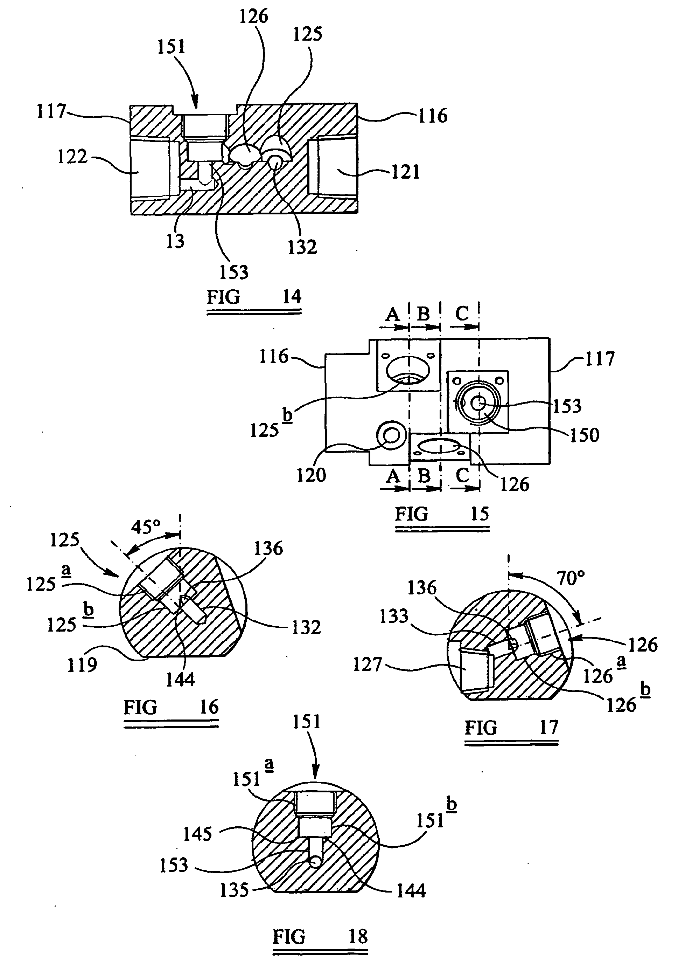

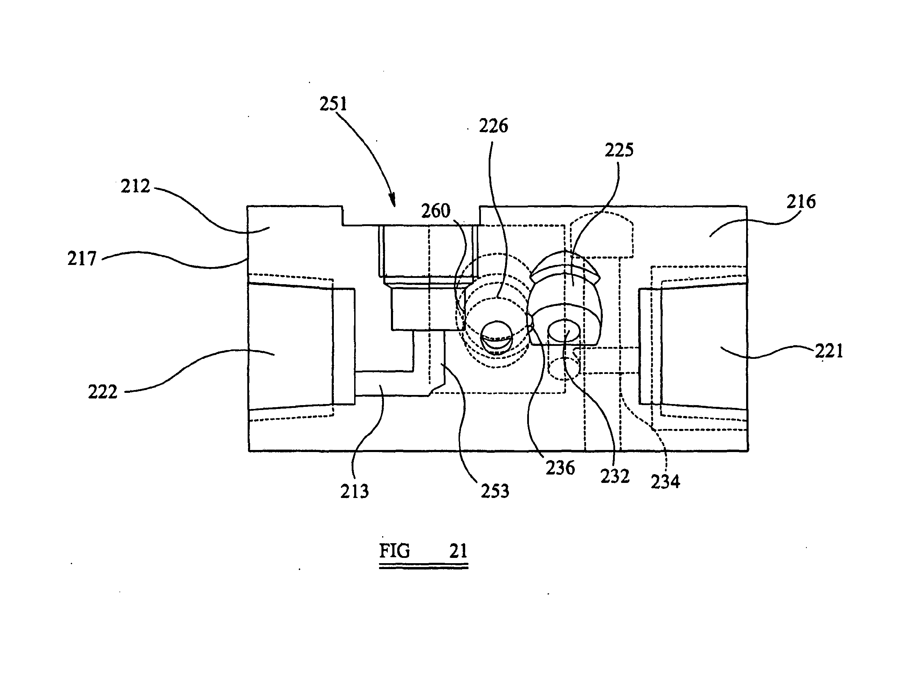

It will be appreciated that in an alternative embodiment the bleed and second isolation valve pockets 126 and 150 could be disposed relative to one another in such a manner that they intersect at an opening in the same way as the first isolation valve and bleed pockets 125, 126. This is illustrated in figure 21, which corresponds to figure 14 but with both isolation valve pockets intersecting the bleed pocket. Features corresponding to the previous embodiment are given the same reference number but increased by 100. The openings are indicated by reference numbers 236 and 260.

It will be appreciated that numerous modifications to the above described design may be made without departing from the scope of the invention as defined in the appended claims. For example, the valve types need not necessarily be needle valves having stems with part spherical tips, other types of needle valve sealing tips (such as ball ends or tapered) may be used and will be evident to the person skilled in the art. Although the valve manifolds are described in relation to mounting a pressure gauge, they may be used to support other types of gauges, sensors or transducers. For convenience the term "sensor" is used to include all these. Furthermore, although there are advantages associated with the manifold body being of a generally cylindrical shape the invention may be applied to other manifold shapes.

The described and illustrated embodiments are to be considered as illustrative and not restrictive in character, it being understood that only the preferred embodiments have been shown and described and that all changes and modifications that come within the scope of the inventions as defined in the claims are desired to be protected. It should be understood that while the use of words such as "preferable", "preferably", "preferred" or "more preferred" in the description suggest that a feature so described may be desirable, it may nevertheless not be necessary and embodiments lacking such a feature may be contemplated as within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. An isolation valve manifold for interconnecting a fluid flow conduit (10) and a sensor (14) for sensing a fluid flow characteristic, the manifold comprising at least one body (12) having an inlet (21) for fluid communication with the fluid flow conduit (10) an outlet (22) for fluid communication with the sensor (14) and a fluid path (32-35) between the inlet and outlet, an outlet bleed port (27) in selective fluid communication with the fluid path for bleeding fluid from the fluid path, the body (12) having an outer surface (18), first and second valve cavities (25,26) that extend into the body from the outer surface, the first valve cavity (25) for receipt of a first isolation valve (13) for blocking the fluid path and defining a first isolation valve chamber (25b) that forms part of the fluid path, the second valve cavity (26) for receipt of a bleed valve (15) and defining a bleed valve chamber (26b) that forms part of the fluid path, **characterised by** that the first and second valve cavities (25,26) are angularly offset and arranged such that the bleed valve and isolation valve chambers (25b, 26b) intersect one another so as to define an interconnecting opening (36) that provides fluid communication between the bleed valve chamber (26b) and the isolation valve chamber (25b).

2. An isolation valve manifold according to claim 1, wherein the first and second valve cavities are laterally offset in the direction along the fluid path.

3. An isolation valve manifold according to claim 1 or 2, wherein the first and second valve cavities are each in the form of substantially cylindrical bores, each cylindrical bore being defined by a base wall and a side wall.

4. An isolation valve manifold according to claim 3, wherein the interconnecting opening is defined in the side wall of each of the first and second valve cavities.

5. An isolation valve manifold according to claim 4, wherein the interconnecting opening is defined adjacent to the base walls of the first and second valve cavities.

6. An isolation valve manifolds according to any one of claims 3, 4 or 5, wherein the first valve cavity has a first portion that extends from the outer surface of the body and which is internally configured for engagement with part of the isolation valve and a second portion that defines the isolation valve chamber.

7. An isolation valve manifold according to claims. 3 to 6, wherein the second valve cavity has a first portion that extends from the outer surface of the body and which is internally configured for engagement with part of the bleed valve and a second portion that defines the bleed valve chamber.

8. An isolation valve manifold according to any one of claims 3 to 7, wherein the base wall of the isolation valve cavity is penetrated by a first connecting passage and defines an isolation valve seat around an end of the first connecting passage.

9. An isolation valve manifold according to claim 8, wherein the first connecting passage forms part of the fluid path and is in fluid communication with the inlet.

10. An isolation valve manifold according to claim 8 or 9, wherein an inlet passage interconnnects the inlet and the first connecting passage.

11. An isolation valve manifold according to any one of claims 3 to 10.
wherein the base wall of the bleed valve cavity is penetrated by a second connecting passage and defines a bleed valve seat around an end of the second connecting passage.

12. An isolation valve manifold according to claim 11, wherein the second connecting passage forms part of the fluid path and is in fluid communication with the outlet bleed port.

13. An isolation valve manifold according to claim 11 or 12, wherein the second connecting passage interconnects the bleed valve cavity and the outlet bleed port.

14. An isolation valve manifold according to any preceding claim, further comprising a third valve cavity that extends into the body from the outer surface, for receipt of a second isolation valve and defining a second isolation valve chamber that forms part of the fluid path.

15. An isolation valve manifold according to claim 14, wherein the third valve chamber is connected to the bleed valve chamber so provide fluid communication between the bleed valve chamber and the second isolation valve chamber.

16. An isolation valve manifold assembly (11) comprising an isolation valve manifold according to any preceding claim in combination with at least a first isolation valve (13) received in said first valve cavity (25) and operable close said fluid path and a bleed valve (15) received in said second cavity (26) and operable to prevent fluid communication between the fluid path and the outlet bleed port (27)

## Patentansprüche

1. Absperrventilverteiler für das Verbinden eines Strömungskanals (10) und eines Sensors (14) für das Messen einer Strömungscharakteristik, wobei der Verteiler mindestens ein Gehäuse (12) mit einem Eintritt (21) für eine Fluidverbindung mit dem Strömungskanal (10), einen Austritt (22) für eine Fluidverbindung mit dem Sensor (14) und einen Fluidweg (32-35) zwischen dem Eintritt und dem Austritt aufweist, wobei eine Austrittsablassöffnung (27) in selektiver Fluidverbindung mit dem Fluidweg für das Ablassen von Fluid aus dem Fluidweg vorhanden ist, wobei das Gehäuse (12) eine Auf3enfläche (18), einen ersten und zweiten Ventilhohlraum (25, 26) aufweist, die sich in das Gehäuse von der Außenfläche erstrecken, wobei der erste Ventilhohlraum (25) für die Aufnahme eines ersten Absperrventils (13) für das Absperren des Fluidweges und das Definieren einer ersten Absperrventilkammer (25b) vorhanden ist, die einen Teil des Fluidweges bildet, wobei der zweite Ventilhohlraum (26) für die Aufnahme eines Ablassventils (15) und das Definieren einer Ablassventilkammer (26b) vorhanden ist, die einen Teil des Fluidweges bildet, **dadurch gekennzeichnet, dass** der erste und zweite Ventilhohlraum (25, 26) winkelig versetzt und so angeordnet sind, dass sich die Ablassventil- und Absperrvenfilkatnmern (25b, 26b) miteinander so schneiden, dass eine Verbindungsöffnung (36) definiert wird, die eine Fluidverbindung zwischen der Ablassventilkammer (26b) und der Absperrventilkammer (25b) liefert.

2. Absperrventilverteiler nach Anspruch 1, bei dem der erste und zweite Ventilhohlraun in der Richtung längs des Fluidweges seitlich versetzt sind.

3. Absperrventilverteiler nach Anspruch 1 oder 2, bei dem der erste und zweite Ventilhohlraum jeweils in der Form von im Wesentlichen zylindrischen Bohrungen vorliegen, wobei eine jede zylindrische Bohrung durch eine Basiswand und eine Seitenwand definiert wird.

4. Absperrventilverteiler nach Anspruch 3, bei dem die Vexbindungsöffnung in der Seitenwand eines jeden des ersten und zweiten Ventilhohlraumes definiert wird.

5. Absperrventilverteiler nach Anspruch 4, bei dem die Verbindungsöffnung benachbart den Basiswänden des ersten und zweiten Ventilhohlraumes definiert wird.

6. Absperrventilverteiler nach einem der Ansprüche 3, 4 oder 5, bei dem der erste Ventilhohlraum einen ersten Abschnitt, der sich von der Außenfläche des Gehäuses aus erstreckt, und der innen für einen Eingriff mit einem Teil des Absperrventils ausgebildet ist, und einen zweiten Abschnitt aufweist, der die Absperrventilkammer definiert.

7. Absperrventilverteiler nach einem der Ansprüche 3 bis 6, bei dem der zweite Ventilhohlraum einen ersten Abschnitt, der sich von der Außenfläche des Gehäuses aus erstreckt, und der innen für einen Eingriff mit einem Teil des Ablassventils ausgebildet ist, und einen zweiten Abschnitt aufweist, der die Ablassventilkammer definiert.

8. Absperrventilverteiler nach einem der Ansprüche 3 bis 7, bei dem die Basiswand des Absperrventilhohlraumes durch einen ersten Verbindungskanal durchdrungen wird und einen Absperrventilsitz um ein Ende des ersten Verbindungskanals herum definiert.

9. Abspernrentilverteiler nach Anspruch 8, bei dem der erste Verbindungskanal einen Teil des Fluidweges bildet und in Fluidverbindung mit dem Eintritt ist.

10. Absperrventilverteiler nach Anspruch 8 oder 9, bei dem ein Eintrittskanal den Eintritt und den ersten Verbindungskanal verbindet.

11. Absperrventilverteiler nach einem der Ansprüche 3 bis 10, bei dem die Basiswand des Ablassventilhohlraumes durch einen zweiten Verbindungskanal durchdrungen wird und einen Ablassventilsitz um ein Ende des zweiten Verbindungskanals herum definiert.

12. Absperrventilverteiler nach Anspruch 11, bei dem der zweite Verbindungskanal einen Teil des Fluidweges bildet und in Fluidverbindung mit der Austrittsablassörfnung ist.

13. Absperrventilverteiler nach Anspruch 11 oder 12, bei dem der zweite Verbindungskanal den Ablassventilhohlraum und die Austrittsablassöffnung verbindet.

14. Absperrventilverteiler nach einem der vorhergehenden Ansprüche, der außerdem einen dritten Ventilhohlraum aufweist, der sich in das Gehäuse von der Außenfläche erstreckt, um ein zweites Absperrventil auszunehmen, und um eine zweite Absperrventilkammer zu definieren, die einen Teil des Fluidweges bildet.

15. Absperrventilverteiler nach Anspruch 14, bei dem die dritte Ventilkammer mit der Ablassventilkammer verbunden ist, um so eine Fluidverbindung zwischen der Ablassventilkammer und der zweiten Absperrventilkammer zu bewirken.

16. Absperrventilverteilerbaugruppe (11), die einen Absperrventilverteiler nach einem der vorhergehenden Ansprüche in Kombination mit mindestens einem ersten Absperrventil (13), das im ersten Ventilhohlraum (25) aufgenommen wird und funktionsfähig ist, um den Fluidweg zu schließen, und einem Ablassventil (15) aufweist, das im zweiten Hohlraum (26) aufgenommen wird und funktionsfähig ist, um eine Fluidverbindung zwischen dem Fluidweg und der Austrittsablassöffhung (27) zu verhindern.

## Revendications

1. Collecteur de vanne d'isolement pour interconnecter une conduite d'écoulement de fluide (10) et un capteur (14), pour détecter une caractéristique d'écoulement du fluide, le collecteur comprenant au moins un corps (12), comportant une entrée (21) destinée à établir une communication de fluide avec la conduite d'écoulement du fluide (10), une sortie (22) destinée à établir une communication de fluide avec le capteur (14), et une trajectoire du fluide (32-35) entre l'entrée et la sortie, un orifice de purge de sortie (27) en communication de fluide sélective avec la trajectoire du fluide, pour purger le fluide de la trajectoire du fluide, le corps (12) comportant une surface externe (18), des première et deuxième cavités de vanne (25, 26), s'étendant dans le corps à partir de la surface extérieure, la première cavité de vanne (25) étant destinée à recevoir une première vanne d'isolement (13) pour bloquer la trajectoire du fluide, et définissant une première chambre de la vanne d'isolement (25b), faisant partie de la trajectoire du fluide, la deuxième cavité de vanne (26) étant destinée à recevoir une vanne de purge (15) et définissant une chambre de la vanne de purge (26b), faisant partie de la trajectoire du fluide, **caractérisé en ce que** les première et deuxième cavités de vanne (25, 26) sont décalées angulairement et agencées de sorte que les chambres de la vanne de purge et de la vanne d'isolement (25b, 26b) se coupent mutuellement, de sorte à définir une ouverture d'interconnexion (36) établissant une communication de fluide entre la chambre de la vanne de purge (26b) et la chambre de la vanne d'isolement (25b).

2. Collecteur de vanne d'isolement selon la revendication 1, dans lequel les première et deuxième cavités de vanne sont décalées latéralement dans la direction allant le long de la trajectoire du fluide.

3. Collecteur de vanne d'isolement selon les revendications 1 ou 2, dans lequel les première et deuxième cavités de vanne ont chacune la forme d'alésages pratiquement cylindriques, chaque alésage cylindrique étant défini par une paroi de base et une paroi latérale.

4. Collecteur de vanne d'isolement selon la revendication 3, dans lequel l'ouverture d'interconnexion est définie dans la paroi latérale de chacune des première et deuxième cavités de vanne.

5. Collecteur de vanne d'isolement selon la revendication 4, dans lequel l'ouverture d'interconnexion est définie près des parois de base des première et deuxième cavités de vanne.

6. Collecteur de vanne d'isolement selon l'une quelconque des revendications 3, 4 ou 5, dans lequel la première cavité de vanne comporte une première partie s'étendant à partir de la surface externe du corps, et ayant une configuration interne destinée à permettre un engagement dans une partie de la vanne d'isolement, et une deuxième partie définissant la chambre de la vanne d'isolement.

7. Collecteur de vanne d'isolement selon les revendications 3 à 6, dans lequel la deuxième cavité de vanne comporte une première partie s'étendant à partir de la surface externe du corps et ayant une configuration interne destinée à permettre un engagement dans une partie de la soupape de purge, et une deuxième partie définissant la chambre de la vanne de purge.

8. Collecteur de vanne d'isolement selon l'une quelconque des revendications 3 à 7, dans lequel la paroi de base de la cavité de la vanne d'isolement est traversée par un premier passage de connexion et définit un siège de la vanne d'isolement autour d'une extrémité du premier passage de connexion.

9. Collecteur de vanne d'isolement selon la revendication 8, dans lequel le premier passage de connexion fait partie de la trajectoire du fluide et est en communication de fluide avec l'entrée.

10. Collecteur de vanne d'isolement selon les revendications 8 ou 9, dans lequel un passage d'entrée assure l'interconnexion de l'entrée et du premier passage d'interconnexion.

11. Collecteur de vanne d'isolement selon l'une quelconque des revendications 3 à 10, dans lequel la paroi de base de la cavité de la soupape de purge est traversée par un deuxième passage de connexion et définit un siège de la vanne de purge autour d'une extrémité du deuxième passage de connexion.

12. Collecteur de vanne d'isolement selon la revendication 11, dans lequel le deuxième passage de connexion fait partie de la trajectoire du fluide et est en communication avec l'orifice de purge de sortie.

13. Collecteur de vanne d'isolement selon les revendications 11 ou 12, dans lequel le deuxième passage de connexion assure l'interconnexion de la cavité de la vanne de purge et de l'orifice de purge de sortie.

14. Collecteur de vanne d'isolement selon l'une quelconque des revendications précédentes, comprenant en outre une troisième cavité de vanne, s'étendant dans le corps à partir de la surface externe, destinée à recevoir une deuxième vanne d'isolement et définissant une deuxième chambre de la vanne d'isolement faisant partie de la trajectoire du fluide.

15. Collecteur de vanne d'isolement selon la revendication 14, dans lequel la troisième chambre de vanne est connectée à la chambre de la vanne de purge, établissant ainsi une communication de fluide entre la chambre de la vanne de purge et la deuxième chambre de la vanne d'isolement.

16. Assemblage de collecteur de vanne d'isolement (11), comprenant un collecteur de vanne d'isolement selon l'une quelconque des revendications précédentes, en combinaison avec au moins une première vanne d'isolement (13) reçue dans ladite première cavité de vanne (25) et servant à fermer ladite trajectoire du fluide, et une vanne de purge (15) reçue dans ladite deuxième cavité (26) et servant à empêcher l'établissement d'une communication de fluide entre la trajectoire du fluide et l'orifice de purge de sortie (27).
